# FASCICULE DE BREVET EUROPEEN

(11) **EP 2 182 236 B1**
(45) Date de publication et mention de la délivrance du brevet: **28.09.2011**
(21) Numéro de dépôt: 09174225.4
(22) Date de dépôt: 27.10.2009
(51) Int. Cl.: F16D 66/02

(54) **Témoin d'usure d'une garniture de friction de véhicule automobile, notamment d'une garniture de frein**
Verschleißanzeige eines Reibungsbelags eines Kraftfahrzeugs, insbesondere eines Bremsbelags
Wear indicator for the friction lining of an automobile, in particular of a brake lining

(30) Priorité: 28.10.2008 FR 0857335
(43) Date de publication de la demande: 05.05.2010
(73) Titulaire: Sadeca Systems. S.L.U., 08181 Sentmenat (Barcelona) (ES)
(72) Inventeur: Angli Folch, Jordi, 08140, CALDES DE MONTBUI (BARCELONE) (ES)
(74) Mandataire: de la Bigne, Guillaume Michel Marie

(56) Documents cités:
- EP-A- 0 464 347
- EP-A- 0 669 481
- EP-A- 0 781 936

## Description

La présente invention concerne un témoin d'usure d'une garniture de friction de véhicule automobile, notamment d'une garniture de frein.

Une garniture de friction de véhicule automobile comporte une surface de frottement destinée à venir en contact avec des organes en mouvement pour en réduire la vitesse par frottement. Par exemple, une garniture de friction peut équiper un système de freinage de véhicule automobile.

La garniture de friction est particulièrement sujette à l'usure, si bien qu'elle doit être remplacée lorsque l'usure devient trop importante.

Dans ce qui suit, on appellera « direction d'usure » la direction dans laquelle une dimension de la garniture de friction diminue à cause de l'usure. Habituellement, cette direction d'usure est perpendiculaire à la surface de garniture qui est sujette à l'usure.

Afin d'informer un utilisateur sur le niveau d'usure de la garniture de friction, on a proposé dans l'état de la technique, notamment d'après EP-A-0 464 347, un témoin d'usure pour garniture de friction, notamment pour frein de véhicule automobile.

Ce témoin d'usure comprend un corps, destiné à être encliqueté sur un support de garniture de friction à l'aide d'un organe d'encliquetage. Ce corps est muni d'une face d'usure agencée en retrait par rapport à une surface de frottement de la garniture de friction à l'état neuf.

Le corps comporte habituellement un orifice de logement d'un organe filaire de détection d'au moins un niveau d'usure critique de la garniture. Cet organe filaire, formant une boucle dans le corps, est destiné à être relié électriquement à un dispositif électronique susceptible de mettre en évidence des changements d'état de l'organe de détection.

Lorsque, du fait de l'usure de la garniture de friction au contact du disque de frein, ce disque atteint lors du freinage l'organe filaire de détection, cet organe de détection s'use à son tour jusqu'à être sectionné. Le dispositif électronique détecte alors un changement d'état électrique de l'organe filaire.

L'utilisateur est donc averti, grâce au dispositif électronique, que la garniture a atteint le niveau d'usure critique et doit être remplacée dès que possible.

On notera qu'il est parfois difficile de positionner de manière simple, rapide et précise l'organe filaire de détection d'usure dans le corps. En effet, EP-A-0 464 347 propose de réaliser le corps en deux parties surmoulées, l'organe filaire étant d'abord positionné sur une partie du corps puis la seconde partie du corps étant surmoulée sur la première partie portant l'organe filaire.

L'invention a notamment pour but de remédier à cet inconvénient en fournissant un témoin d'usure pouvant être assemblé de manière simple et fiable.

A cet effet, l'invention a pour objet un témoin d'usure pour garniture de friction, notamment pour frein de véhicule automobile, comportant un corps destiné à être encliqueté sur un support de garniture de friction à l'aide d'un organe d'encliquetage, le corps comprenant un premier orifice formant logement d'un organe filaire de détection d'usure, caractérisé en ce qu'il comporte un organe de maintien de l'organe de détection d'usure dans le premier orifice, distinct du corps, l'organe d'encliquetage coopérant avec cet organe de maintien de façon à l'immobiliser sur le corps, et en ce que l'organe de maintien comporte un élément formant plot, l'organe de détection d'usure formant une boucle ouverte sensiblement plane entourant cet élément formant plot.

Dans ce témoin d'usure selon l'invention, le positionnement de l'organe de détection d'usure dans le corps est imposé par la forme du premier orifice de logement ménagé dans le corps et par la forme de l'organe de maintien. Ainsi, en conformant ce corps et cet organe de maintien de manière simple et précise, par exemple par moulage, chaque moulage étant réalisé séparément de l'organe filaire, il est possible de garantir, après assemblage de ces éléments entre eux, un positionnement précis de l'organe de détection d'usure dans le corps.

De plus, l'immobilisation de l'organe de moulage dans le corps est réalisée sans ajout d'éléments supplémentaire dans le témoin d'usure, en utilisant un organe d'encliquetage qui existe généralement déjà sur un témoin d'usure classique.

Afin d'assembler ce témoin d'usure, dans lequel l'organe d'encliquetage est rapporté sur le corps, il suffit de réaliser un procédé de fabrication simple comportant les étapes suivantes :
- une étape d'insertion de l'organe filaire de détection d'usure dans le premier orifice formant logement,
- une étape d'insertion de l'organe de maintien dans le second orifice formant logement, de façon à maintenir l'organe filaire dans le premier orifice formant logement,
- une étape d'assemblage de l'organe d'encliquetage sur le corps, de façon à immobiliser l'organe de maintien sur le corps.

De telles étapes peuvent être facilement automatisées, tout en garantissant un positionnement précis de l'organe de détection d'usure.

Un témoin d'usure selon l'invention peut en outre comporter l'une ou plusieurs des caractéristiques suivantes.
- Le premier orifice formant logement de l'organe de détection d'usure est formé par un orifice traversant du corps.
- Le premier orifice formant logement de l'organe de détection d'usure comporte au moins un débouché oblong, imposant une orientation prédéterminée à la boucle de l'organe filaire de détection d'usure.
- Le corps comporte une gorge de logement de l'organe d'encliquetage, et un second orifice formant logement de l'organe de maintien, tels que ce second orifice formant logement de l'organe de maintien débouche au moins partiellement dans la gorge de logement de l'organe d'encliquetage.
- La direction d'introduction de l'organe de maintien dans le second orifice est sensiblement orthogonale à la direction d'introduction de l'organe de détection dans le premier orifice.
- L'organe de maintien a une forme cylindrique, de préférence de base circulaire, le second orifice formant logement de cet organe de maintien étant formé au moins partiellement par un orifice cylindrique de forme générale complémentaire à celle de l'organe de maintien, transversal au premier orifice de logement de l'organe de détection d'usure, l'organe de maintien formant le plot d'enroulement de la boucle de l'organe de détection.
- La direction d'introduction de l'organe de maintien dans le second orifice est sensiblement parallèle à la direction d'introduction de l'organe de détection dans le premier orifice.
- L'élément formant plot a une forme générale cylindrique, de préférence de base circulaire, d'axe sensiblement orthogonal au sens d'introduction de l'organe de détection dans le premier orifice.
- Des surfaces complémentaires de coincement dans le corps de la boucle de l'organe de détection sont formées, soit sur l'organe de maintien, soit sur l'organe de maintien et le corps.
- Le témoin d'usure étant destiné à être usé conjointement à la garniture de friction selon une direction d'usure, le corps et l'organe de maintien comprennent des surfaces complémentaires d'immobilisation de l'organe de maintien dans le premier orifice de logement transversalement à la direction d'introduction de l'organe de détection dans le premier orifice, ces surfaces d'immobilisation transversale n'étant pas destructibles avant sectionnement de la boucle de l'organe de détection par l'usure.
- Le témoin d'usure est usé conjointement à la garniture de friction selon une direction d'usure, qui est parallèle à la direction d'introduction de l'organe de détection dans le premier orifice.
- Le témoin d'usure est usé conjointement à la garniture de friction selon une direction d'usure, qui est orthogonale à la direction d'introduction de l'organe de détection dans le premier orifice.
- L'organe d'encliquetage est soit rapporté sur l'organe de maintien ou le corps et est formé par exemple par un ressort en forme générale d'épingle, soit - en combinaison avec un support d'une garniture - venu de matière avec le support de la garniture

L'invention sera mieux comprise à la lecture de la description qui va suivre, donnée uniquement à titre d'exemple et faite en se référant aux dessins annexés dans lesquels :
- la figure 1 est une vue en perspective d'un témoin d'usure selon un premier mode de réalisation de l'invention ;
- la figure 2 est une vue en perspective d'un corps du témoin d'usure de la figure 1 ;
- la figure 3 est une vue en perspective du témoin d'usure de la figure 1, encliqueté sur un support de garniture de friction ;
- les figures 4 et 5 sont des vues en perspective du témoin d'usure de la figure 1 en cours de son assemblage ;
- la figure 6 est une vue en perspective du témoin d'usure de la figure 1 en cours d'usure ;
- la figure 7 est une vue en perspective d'un témoin d'usure selon un deuxième mode de réalisation de l'invention ;
- la figure 8 est une vue en perspective du témoin d'usure de la figure 7, encliqueté sur un support de garniture de friction ;
- la figure 9 est une vue en perspective d'un corps du témoin d'usure de la figure 7 ;
- la figure 10 est une vue en perspective d'un organe de maintien du témoin d'usure de la figure 7 ;
- la figure 11 est une vue en perspective du témoin d'usure de la figure 7, coupé longitudinalement ;
- les figures 12 et 13 sont des vues en perspective du témoin d'usure de la figure 7 en cours de son assemblage ;
- la figure 14 est une vue en perspective du témoin d'usure de la figure 7 en cours d'usure.

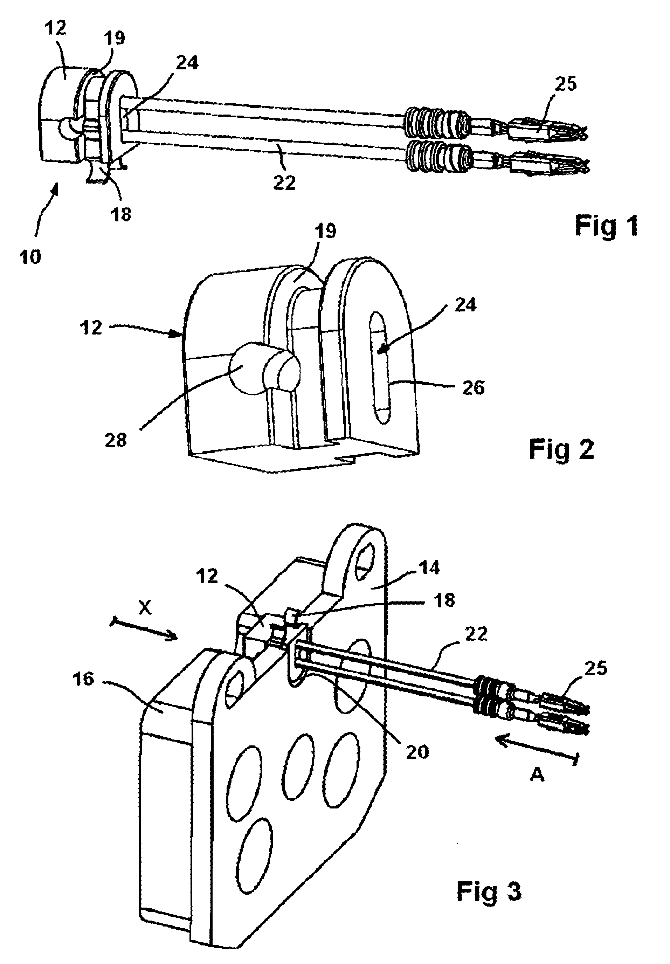

On a représenté sur la figure 1 un témoin d'usure 10 pour garniture de friction, notamment pour frein de véhicule automobile, selon un premier mode de réalisation de l'invention.

Le témoin d'usure 10 comporte un corps 12, représenté plus en détail sur la figure 2. Ce corps 12 est de préférence réalisé en matériau relativement rigide, par exemple en résine phénolique.

Ce corps 12 est destiné à être encliqueté de manière classique sur un support 14 d'une garniture de friction 16, comme cela est représenté sur la figure 3.

A cet effet, le témoin d'usure 10 est muni d'un organe d'encliquetage 18, formé par un ressort en forme générale d'épingle en U. Cet organe d'encliquetage 18 en U est susceptible de s'encliqueter, entre les branches du U, dans une gorge de logement 19 ménagée sur le corps 12, et susceptible de s'encliqueter, sur une partie extérieure du U, dans une encoche 20 du support 14. Ainsi, l'organe d'encliquetage 18 est intercalé entre le corps 12 et le support 14 de façon à permettre l'assemblage de ce corps 12 relativement rigide sur ce support 14.

En variante, le corps 12 pourrait être conçu en matériau moins rigide, auquel cas l'organe d'encliquetage pourrait être venu de matière avec le support de la garniture.

Lorsque le témoin d'usure 10 est encliqueté sur le support 14 de garniture, ce témoin d'usure est susceptible d'être usé conjointement à la garniture 16 selon une direction d'usure X. En effet, lors du freinage, un organe rotatif vient frotter contre une surface d'usure de la garniture 16, perpendiculaire à la direction d'usure X, ce qui a pour effet d'user la garniture 16 dans cette direction d'usure X, en réduisant son épaisseur.

Afin de détecter lorsque la garniture atteint un niveau d'usure critique, le témoin d'usure 10 comporte un organe filaire 22 de détection d'usure, logé dans un premier orifice 24 formant logement de cet organe filaire 22, ménagé dans le corps 12.

Ce premier orifice 24 est de préférence formé par un orifice traversant du corps 12, et comporte au moins un débouché oblong 26. Ainsi, lorsqu'il est logé dans le premier orifice 24, l'organe de détection d'usure 22 forme une boucle ouverte sensiblement plane dont l'orientation est imposée par le débouché oblong 26.

On notera que l'organe filaire 22 est destiné à être relié électriquement à un dispositif électronique classique de détection d'usure, par exemple à l'aide de connecteurs électriques 25. On notera que ces connecteurs électriques 25 sont habituellement relativement volumineux, et empêcheraient le passage des extrémités de l'organe filaire 22 dans le corps 12.

Le corps 12 comporte également un second orifice 28 formant logement pour un organe 30, distinct du corps 12, de maintien de l'organe de détection d'usure 22 dans le premier orifice 24.

On notera que ce second orifice 28 débouche au moins partiellement dans la gorge 19 de logement de l'organe d'encliquetage 18, si bien que l'organe d'encliquetage est susceptible de coopérer avec l'organe de maintien 30 de façon à l'immobiliser sur le corps 12, dans le second orifice 28.

L'organe de maintien 30 comporte un élément formant plot, destiné à s'étendre transversalement dans le premier orifice 24, de sorte que la boucle ouverte formée par l'organe de détection d'usure 22 entoure cet élément formant plot.

Conformément au premier mode de réalisation de l'invention, l'organe de maintient 30 est formé par cet élément formant plot. En effet, l'organe de maintien 30 a une forme cylindrique, de préférence de base circulaire. Le second orifice 28 formant logement de cet organe de maintien 30 est donc formé, au moins partiellement, par un orifice cylindrique de forme générale complémentaire à celle de l'organe de maintien 30, transversal au premier orifice 24 formant logement de l'organe de détection d'usure 22.

Le témoin d'usure 10 peut être fabriqué de manière simple et précise au cours d'un procédé de fabrication comprenant notamment les étapes décrites ci-après.

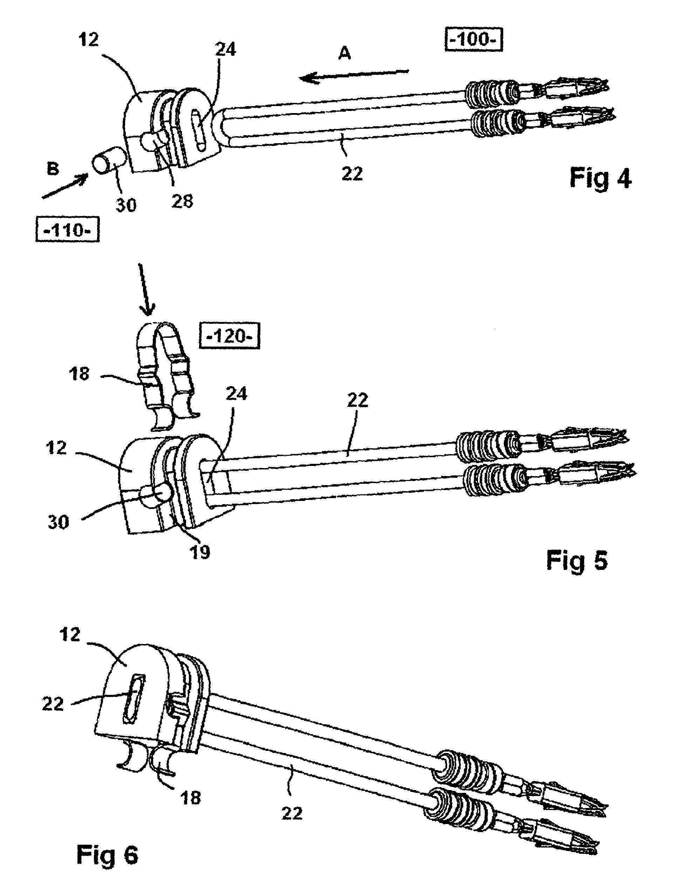

Ce procédé de fabrication comporte une étape 100, représentée sur la figure 4, d'insertion de l'organe filaire 22 de détection d'usure dans le premier orifice de logement 24. Cet organe de détection d'usure 22 est introduit dans le premier orifice de logement 24 selon une direction d'introduction A qui est sensiblement parallèle à la direction d'usure X. En variante, l'orifice de logement 24 pourrait être ménagé sur le corps 12 de façon que la direction d'introduction A soit sensiblement orthogonale à la direction d'usure X.

Le procédé de fabrication comporte ensuite une étape 110, également représentée sur la figure 4, d'insertion de l'organe de maintien 30 dans le second orifice de logement 28. Cet organe de maintien 30 est introduit dans le second orifice de logement 28 selon une direction d'introduction B qui est sensiblement orthogonale à la direction A d'introduction de l'organe filaire 22 de détection d'usure dans le premier orifice de logement 24.

Ainsi, une fois l'organe de maintien 30 inséré, l'organe filaire 22 entoure le plot formé par cet organe de maintien 30, et ne peut plus sortir du premier orifice de logement 24 dans la direction opposée à sa direction d'introduction A. L'organe filaire 22 est donc ainsi maintenu dans le premier orifice de logement 24.

Le procédé de fabrication comporte également une étape 120, représentée sur la figure 5, d'assemblage de l'organe d'encliquetage 18 dans la gorge 19 du corps 12. Cet organe d'encliquetage 18 permet d'immobiliser l'organe de maintien 30 dans le second orifice de logement 28.

Du fait de cet assemblage, l'organe de détection d'usure 22 est positionné avec précision dans le corps 12, et y est maintenu de manière simple et efficace.

On notera que, du fait de sa simplicité de mise en oeuvre, ce procédé de fabrication peut être aisément réalisé par un automate.

On a représenté sur la figure 6 le témoin d'usure 10, au cours de l'usure de la garniture de friction 16.

Lorsque le niveau d'usure atteint l'organe de détection 22, celui ci s'use conjointement à la garniture de friction 16 et au corps 12, comme cela est représenté sur la figure 6. L'organe de détection 22 est ainsi usé jusqu'à rompre, rompant alors également la connexion électrique formée par la boucle de cet organe de détection 22.

Dans ce cas, cette rupture de la connexion électrique est détectée par le dispositif électronique auquel l'organe de détection 22 est relié électriquement. Ce dispositif électronique change alors d'état, de façon à avertir l'utilisateur que la garniture a atteint un niveau critique, par exemple à l'aide d'un dispositif lumineux classique.

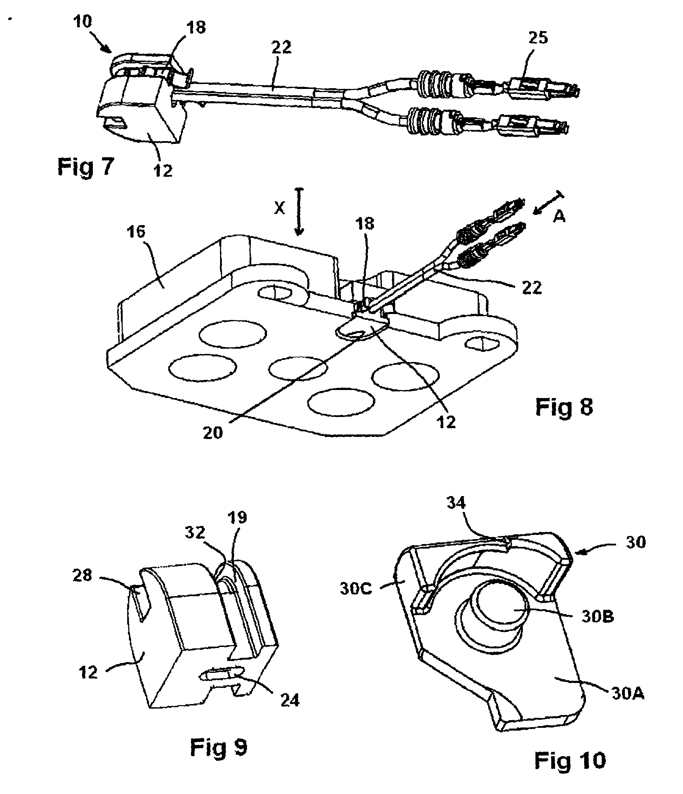

On a représenté sur la figure 7 un témoin d'usure 10 pour garniture de friction selon un deuxième mode de réalisation de l'invention.

Sur les figures 7 à 14, les éléments analogues à ceux des figures 1 à 6 sont désignés par des références identiques.

Conformément à ce deuxième mode de réalisation, le second orifice 28 s'étend sensiblement dans la même direction que le premier orifice 24. Les premier 24 et second 28 orifices forment alors ensemble un orifice commun traversant le corps 12.

Afin d'immobiliser l'organe de maintien 30 dans le second orifice de logement 28, le corps 12 est muni, à l'embouchure de ce second orifice 28, d'au moins une surface 32 d'immobilisation de cet organe de maintien 30. Cette surface 32 est destinée à immobiliser l'organe de maintien 30 au moins transversalement à la direction A d'introduction de l'organe de détection 22 dans le premier orifice 24. Cette surface d'immobilisation transversale 32 n'est pas destructibles avant sectionnement de la boucle de l'organe de détection 22 par l'usure.

L'organe de maintien 30 comporte une partie longitudinale plane 30A, susceptible d'être insérée dans l'orifice traversant formé par les premier 24 et second 28 orifices. Cette partie longitudinale plane 30A comporte une saillie 30B, s'étendant orthogonalement à la partie plane 30A, de forme générale cylindrique, de préférence de base circulaire. Cette saillie 30B forme donc un plot d'axe sensiblement orthogonal à la direction d'introduction de l'organe de détection 22 dans le premier orifice 24, autour duquel est agencé l'organe de détection 22 afin d'être maintenu dans le premier orifice 24.

L'organe de maintien 30 comporte également une tête 30C d'appui, comprenant au moins une surface 34 complémentaire de la surface 32 du corps 12, et coopérant avec cette surface 32 de façon à immobiliser l'organe de maintien 30 dans le corps 12, transversalement au premier orifice 24. Cette surface d'immobilisation transversale 34 n'est également pas destructibles avant sectionnement de la boucle de l'organe de détection 22 par l'usure.

On notera que la tête 30C de l'organe de maintien 30 recouvre les bords du second orifice 28, de sorte que cette tête 30C assure une fonction d'étanchéité, empêchant des particules abrasives de pénétrer dans le second orifice 28 contenant l'organe de détection 22.

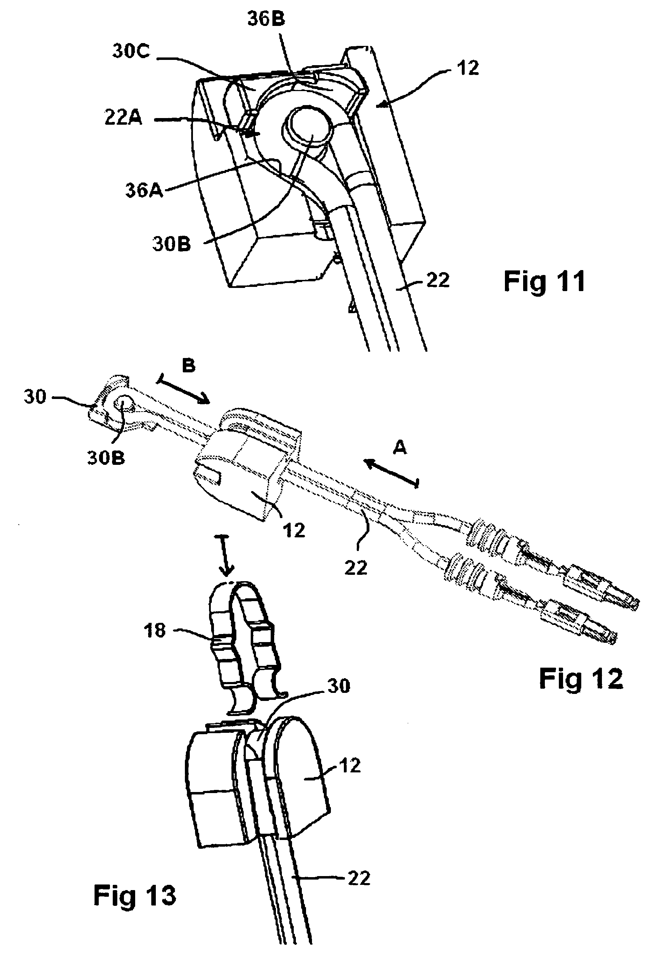

De préférence, le corps 12 et la tête 30C de l'organe de maintien 30 comportent des surfaces respectives 36A, 36B de coincement de la boucle de l'organe de détection 22 dans le corps 12, comme cela est représenté sur la figure 11.

La surface de coincement 36A du corps 12 a une forme générale de rampe de guidage de la boucle de l'organe de détection 22, et est ménagée en vis à vis du plot 30B. Ainsi, la boucle peut être coincée entre la surface de coincement 36A et le plot 30B.

Par ailleurs, la surface de coincement 36B de l'organe de maintien 30 a une forme générale concave de guidage de la boucle de l'organe de détection 22, et est ménagée en vis à vis du plot 30B. Ainsi, la boucle peut être coincée entre la surface de coincement 36B et le plot 30B.

Ces surfaces de coincement 36A, 36B permettent notamment de donner à l'organe de détection 22 une forme telle qu'une partie 22A de la boucle est plus proche de la surface d'usure de la garniture 16 que le reste de l'organe de détection 22. Ainsi, on s'assure que c'est bien la boucle qui sera rompue en première par l'usure, et non pas une autre partie de l'organe de détection 22.

Par ailleurs, les surfaces de coincement 36A, 36B permettent également de retenir l'organe de détection 22 dans le corps 12 lorsque cet organe de détection 22 est rompu, empêchant ainsi à cet organe de détection 22 de s'échapper du témoin d'usure 10 après rupture.

En variante, les surfaces de coincement pourraient être formées uniquement sur l'organe de maintien 30. Dans ce cas, la partie plane 30A de l'organe de maintien 30 comporterait une saillie formant rampe de guidage de la boucle de l'organe de détection 22.

On a représenté sur les figures 12 et 13 des étapes de fabrication du témoin d'usure 10 selon le deuxième mode de réalisation de l'invention.

Ce procédé comporte une étape d'insertion de l'organe filaire 22 de détection d'usure dans le premier orifice de logement 24. Cet organe de détection d'usure 22 est introduit dans le premier orifice de logement 24 selon une direction d'introduction A qui est sensiblement orthogonale à la direction d'usure X. En variante, l'orifice de logement 24 pourrait être ménagé de façon que la direction d'introduction A soit sensiblement parallèle à la direction d'usure X.

Le procédé de fabrication comporte ensuite une étape au cours de laquelle l'organe de détection entoure le plot 30B, et une étape 110, représentée sur la figure 11, d'insertion de l'organe de maintien 30 dans le second orifice de logement 28.

L'organe de maintien 30 et le corps 12 sont conformés de façon que la direction B d'introduction de l'organe de maintien 30 dans le second orifice 28 est sensiblement parallèle à la direction A d'introduction de l'organe de détection dans le premier orifice 24, comme cela est représenté sur la figure 11.

Ainsi, une fois l'organe de maintien 30 inséré, l'organe filaire 22, entourant le plot de l'organe de maintien 30, ne peut plus sortir du premier orifice de logement 24 dans la direction opposée à sa direction d'introduction A. L'organe filaire 22 est donc maintenu dans le premier orifice de logement 24.

Le procédé de fabrication comporte également une étape 120 d'assemblage de l'organe d'encliquetage 18 dans la gorge 19 du corps 12, représentée sur la figure 13. L'organe de maintien 30 est alors immobilisé dans le second orifice de logement 28 grâce à cet organe d'encliquetage 18 et aux surfaces d'immobilisation 32, 34.

L'organe de détection d'usure 22 est alors positionné avec précision dans le corps 12, et y est maintenu de manière simple et efficace.

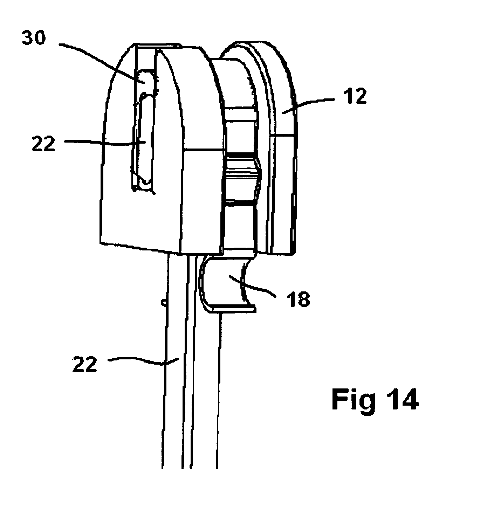

On a représenté sur la figure 14 le témoin d'usure 10 en cours d'usure de la garniture de friction. En cours d'utilisation, la garniture de friction est usée jusqu'à ce que son niveau d'usure atteigne le corps 12, qui commence également à s'user.

Le niveau d'usure atteint ensuite l'organe de détection 22, qui s'use également, comme cela est représenté sur la figure 14, jusqu'à rompre, rompant également la connexion électrique formée par la boucle.

On notera enfin que l'invention n'est pas limitée aux modes de réalisation précédemment décrits, donnés uniquement à titre d'exemple.

## Revendications

1. Témoin d'usure (10) pour garniture de friction, notamment pour frein de véhicule automobile, comportant un corps (12) destiné à être encliqueté sur un support (14) de garniture de friction (16) à l'aide d'un organe d'encliquetage (18), le corps (12) comprenant un premier orifice (24) formant logement d'un organe filaire de détection d'usure (22), **caractérisé en ce qu'**il comporte un organe (30) de maintien de l'organe de détection d'usure (22) dans le premier orifice (24), distinct du corps (12), l'organe d'encliquetage (18) coopérant avec cet organe de maintien (30) de façon à l'immobiliser sur le corps (12), et **en ce que** l'organe de maintien (30) comporte un élément formant plot (30 ; 30B), l'organe de détection d'usure (22) formant une boucle ouverte sensiblement plane entourant cet élément formant plot (30 ; 30B).

2. Témoin d'usure (10) selon la revendication 1, dans lequel le premier orifice (24) formant logement de l'organe de détection d'usure (22) est formé par un orifice traversant du corps (12).

3. Témoin d'usure (10) selon la revendication 1 ou 2, dans lequel le premier orifice (24) formant logement de l'organe de détection d'usure comporte au moines un débouché oblong (26), imposant une orientation prédéterminée à la boucle de l'organe filaire de détection d'usure (22).

4. Témoin d'usure (10) selon l'une quelconque des revendications précédentes, dans lequel le corps (12) comporte une gorge (19) de logement de l'organe d'encliquetage (18), et un second orifice (28) formant logement de l'organe de maintien (30), tels que ce second orifice (28) débouche au moins partiellement dans la gorge (19) de logement de l'organe d'encliquetage (18).

5. Témoin d'usure (10) selon la revendication 4, dans lequel la direction (B) d'introduction de l'organe de maintien (30) dans le second orifice (28) est sensiblement orthogonale à la direction (A) d'introduction de l'organe de détection d'usure (22) dans le premier orifice (24).

6. Témoin d'usure (10) selon la revendication 5, dans lequel l'organe de maintien (30) a une forme cylindrique, de préférence de base circulaire, le second orifice (28) étant formé au moins partiellement par un orifice cylindrique de forme générale complémentaire à celle de l'organe de maintien (30), transversal au premier orifice (24) de logement de l'organe de détection d'usure (22), l'organe de maintien (30) formant l'élément formant plot.

7. Témoin d'usure (10) selon la revendication 4, dans lequel la direction (B) d'introduction de l'organe de maintien dans le second orifice (28) est sensiblement parallèle à la direction (A) d'introduction de l'organe de détection (22) dans le premier orifice.

8. Témoin d'usure (10) selon la revendication 7, dans lequel l'élément formant plot (30B) a une forme générale cylindrique, de préférence de base circulaire, d'axe sensiblement orthogonal à la direction (A) d'introduction de l'organe de détection dans le premier orifice (24).

9. Témoin d'usure (10) selon la revendication 7 ou 8, dans lequel des surfaces complémentaires (36) de coincement dans le corps (12) de la boucle de l'organe de détection d'usure (22) sont formées, soit sur l'organe de maintien (30), soit sur l'organe de maintien (30) et le corps (12).

10. Témoin d'usure (10) selon l'une quelconque des revendications 7 à 9, dans lequel le témoin d'usure (10) étant destiné à être usé conjointement à la garniture de friction (16) selon une direction d'usure (X), le corps (12) et l'organe de maintien (30) comprennent des surfaces complémentaires (32, 34) d'immobilisation de l'organe de maintien (30) dans le second orifice (28) de logement transversalement à la direction (A) d'introduction de l'organe de détection d'usure (22) dans le premier orifice (24), ces surfaces d'immobilisation transversale (32, 34) n'étant pas destructibles avant sectionnement de la boucle de l'organe de détection (22) par l'usure.

11. Témoin d'usure (10) selon l'une quelconque des revendications 1 à 10, dans lequel le témoin d'usure (10) est usé conjointement à la garniture de friction (16) selon une direction d'usure (X), qui est parallèle à la direction (A) d'introduction de l'organe de détection d'usure (22) dans le premier orifice (24).

12. Témoin d'usure (10) selon l'une quelconque des revendications 1 à 10, dans lequel, le témoin d'usure (10) est usé conjointement à la garniture de friction (16) selon une direction d'usure (X), qui est orthogonale à la direction (A) d'introduction de l'organe de détection d'usure (22) dans le premier orifice (24).

13. Témoin d'usure (10) selon l'une quelconque des revendications précédentes, dans lequel l'organe d'encliquetage (18) est soit rapporté sur l'organe de maintien (30) ou le corps (12) et est formé par exemple par un ressort en forme générale d'épingle, soit - en combinaison avec un support d'une garniture (16) - venu de matière avec le support (14) de la garniture (16).

14. Procédé de fabrication d'un témoin d'usure (10) selon l'une quelconque des revendications 1 à 13, dans lequel l'organe d'encliquetage (18) est rapporté sur le corps (12), **caractérisé en ce qu'**il comporte :
- une étape (100) d'insertion de l'organe filaire de détection d'usure (22) dans le premier orifice formant logement (24),
- une étape (110) d'insertion de l'organe de maintien (30) dans le second orifice formant logement (28), de façon à maintenir l'organe de détection d'usure (22) dans le premier orifice formant logement (24),
- une étape (120) d'assemblage de l'organe d'encliquetage (18) sur le corps (12), de façon à immobiliser l'organe de maintien (30) sur le corps (12).

## Claims

1. Wear indicator (10) for friction lining, in particular for motor vehicle brake, comprising a body (12) designed to be clipped onto a friction lining (16) backing plate (14) by means of a clipping component (18), the body (12) comprising a first orifice (24) forming a housing for a wired wear detection component (22), **characterised in that** it comprises a component (30) for holding the wear detection component (22) in the first orifice (24), separate from the body (12), the clipping component (18) cooperating with this holding component (30) so as to immobilise it on the body (12), and **in that** the holding component (30) comprises an element forming a stud (30; 30B), the wear detection component (22) forming a substantially flat open loop surrounding this element forming a stud (30; 30B).

2. Wear indicator (10) according to claim 1, wherein the first orifice (24) forming a housing for the wear detection component (22) is formed by an orifice crossing through the body (12).

3. Wear indicator (10) according to claim 1 or 2, wherein the first orifice (24) forming a housing for the wear detection component comprises at least one oblong opening (26), imposing a predetermined orientation on the loop of the wired wear detection component (22).

4. Wear indicator (10) according to any of the preceding claims, wherein the body (12) comprises a groove (19) for housing the clipping component (18), and a second orifice (28) forming a housing for the holding component (30), such that this second orifice (28) opens at least partially in the groove (19) for housing the clipping component (18).

5. Wear indicator (10) according to claim 4, wherein the direction (B) for inserting the holding component (30) in the second orifice (28) is substantially perpendicular to the direction (A) for inserting the wear detection component (22) in the first orifice (24).

6. Wear indicator (10) according to claim 5, wherein the holding component (30) is cylindrical, preferably with a circular base, the second orifice (28) being formed at least partially by a cylindrical orifice of general shape complementary to that of the holding component (30), transversal to the first orifice (24) for housing the wear detection component (22), the holding component (30) forming the element forming a stud.

7. Wear indicator (10) according to claim 4, wherein the direction (B) for inserting the holding component in the second orifice (28) is substantially parallel to the direction (A) for inserting the detection component (22) in the first orifice.

8. Wear indicator (10) according to claim 7, wherein the element forming a stud (30B) is generally cylindrical, preferably with a circular base, whose axis is substantially perpendicular to the direction (A) for inserting the detection component in the first orifice (24).

9. Wear indicator (10) according to claim 7 or 8, wherein complementary surfaces (36) for wedging the wear detection component loop (22) in the body (12) are formed, either on the holding component (30), or on the holding component (30) and the body (12).

10. Wear indicator (10) according to any of claims 7 to 9, wherein the wear indicator (10) being intended for use in conjunction with the friction lining (16) according to a wear direction (X), the body (12) and the holding component (30) comprise complementary surfaces (32, 34) for immobilising the holding component (30) in the second housing orifice (28) transversally to the direction (A) for inserting the wear detection component (22) in the first orifice (24), the transversally immobilising surfaces (32, 34) being impossible to destroy these transversal immobilisation surfaces (32, 34) before the detection component loop (22) is cropped by wear.

11. Wear indicator (10) according to any of claims 1 to 10, wherein the wear indicator (10) is used in conjunction with the friction lining (16) according to a wear direction (X), which is parallel to the direction (A) for inserting the wear detection component (22) in the first orifice (24).

12. Wear indicator (10) according to any of claims 1 to 10, wherein the wear indicator (10) is used in conjunction with the friction lining (16) according to a wear direction (X), which is perpendicular to the direction (A) for inserting the wear detection component (22) in the first orifice (24).

13. Wear indicator (10) according to any of the preceding claims, wherein the clipping component (18) is either added to the holding component (30) or the body (12) and is formed for example by a spring of general form of a pin, or in combination with a lining backing plate (16) made in one piece with the lining (16) backing plate (14).

14. Method for manufacturing a wear indicator (10) according to any of claims 1 to 13, wherein the clipping component (18) is added to the body (12), **characterised in that** it comprises:
- a step (100) for inserting the wired wear detection component (22) in the first orifice forming a housing (24),
- a step (110) for inserting the holding component (30) in the second orifice forming a housing (28), so as to hold the wear detection component (22) in the first orifice forming a housing (24),
- a step (120) for assembling the clipping component (18) on the body (12), so as to immobilise the holding component (30) on the body (12).

## Patentansprüche

1. Verschleißanzeige (10) für einen Reibungsbelag, insbesondere für eine Kraftfahrzeugbremse, mit einem Körper (12) zum Einrasten auf einem Träger (14) eines Reibungsbelags (16) mit Hilfe eines Einrastelements (18), wobei der Körper (12) eine erste Öffnung (24) umfasst, die eine Aufnahme für ein Drahtelement (22) zur Verschleißerfassung bildet, **dadurch gekennzeichnet, dass** sie ein, vom Körper (12) separates, Element (30) zum Halten des Verschleißerfassungselements (22) in der ersten Öffnung (24) aufweist, wobei das Einrastelement (18) mit diesem Halteelement (30) zusammenwirkt, um es auf dem Körper (12) zu immobilisieren, und dass das Halteelement (30) ein Zapfenelement (30; 30B) umfasst, wobei das Verschleißerfassungselement (22) eine im Wesentlichen plane offene Schlaufe bildet, die dieses Zapfenelement (30; 30B) umgibt.

2. Verschleißanzeige (10) nach Anspruch 1, wobei die erste Öffnung (24), die die Aufnahme für das Verschleißerfassungselement (22) bildet, von einer durchgehenden Öffnung des Körpers (12) gebildet wird.

3. Verschleißanzeige (10) nach Anspruch 1 oder 2, wobei die erste Öffnung (24), die die Aufnahme für das Verschleißerfassungselement bildet, zumindest eine längliche Mündung (26) aufweist, die die Schlaufe des Drahtelements (22) zur Verschleißerfassung in eine vorgegebene Ausrichtung zwingt.

4. Verschleißanzeige (10) nach einem der vorstehenden Ansprüche, wobei der Körper (12) eine Kehlung (19) zur Aufnahme des Einrastelements (18) aufweist, sowie eine zweite Öffnung (28), die eine Aufnahme für das Halteelement (30) bildet, solcherart, dass diese zweite Öffnung (28) zumindest teilweise in die Kehlung (19) zur Aufnahme des Einrastelements (18) mündet.

5. Verschleißanzeige (10) nach Anspruch 4, wobei sich die Richtung (B) der Einführung des Halteelements (30) in die zweite Öffnung (28) im Wesentlichen orthogonal verhält zur Richtung (A) der Einführung des Verschleißerfassungselements (22) in die erste Öffnung (24).

6. Verschleißanzeige (10) nach Anspruch 5, wobei das Halteelement (30) eine zylindrische Form, vorzugsweise mit kreisrunder Grundfläche, hat, wobei die zweite Öffnung (28) zumindest teilweise gebildet wird von einer zylindrischen Öffnung mit einer zu jener des Halteelements (30) im Allgemeinen komplementären Form, quer zur ersten Öffnung (24) zur Aufnahme des Verschleißerfassungselements (22), wobei das Halteelement (30) das Zapfenelement bildet.

7. Verschleißanzeige (10) nach Anspruch 4, wobei sich die Richtung (B) der Einführung des Halteelements in die zweite Öffnung (28) im Wesentlichen parallel verhält zur Richtung (A) der Einführung des Erfassungselements (22) in die erste Öffnung.

8. Verschleißanzeige (10) nach Anspruch 7, wobei das Zapfenelement (30B) eine im Allgemeinen zylindrische Form, vorzugsweise mit kreisrunder Grundfläche, mit im Wesentlichen orthogonaler Achse zur Richtung (A) der Einführung des Erfassungselements in die erste Öffnung (24) hat.

9. Verschleißanzeige (10) nach Anspruch 7 oder 8, wobei komplementäre Flächen (36) zum Einklemmen, im Körper (12), der Schlaufe des Verschleißerfassungselements (22) ausgebildet sind, entweder auf dem Halteelement (30) oder auf dem Halteelement (30) und dem Körper (12).

10. Verschleißanzeige (10) nach einem der Ansprüche 7 bis 9, wobei die Verschleißanzeige (10) zur gemeinsamen Verwendung mit dem Reibungsbelag (16) gemäß einer Verschleißrichtung (X) bestimmt ist, wobei der Körper (12) und das Halteelement (30) komplementäre Flächen (32, 34) zur Immobilisierung des Halteelements (30) in der zweiten Aufnahmeöffnung (28) quer zur Richtung (A) der Einführung des Verschleißerfassungselements (22) in die erste Öffnung (24) umfassen, wobei diese Flächen (32, 34) zur queren Immobilisierung nicht zerstörbar sind vor Durchtrennung der Schlaufe des Erfassungselements (22) durch den Verschleiß.

11. Verschleißanzeige (10) nach einem der Ansprüche 1 bis 10, wobei die Verschleißanzeige (10) gemeinsam mit dem Reibungsbelag (16) gemäß einer Verschleißrichtung (X) verwendet wird, die sich parallel zur Richtung (A) der Einführung des Verschleißerfassungselements (22) in die erste Öffnung (24) verhält.

12. Verschleißanzeige (10) nach einem der Ansprüche 1 bis 10, wobei die Verschleißanzeige (10) gemeinsam mit dem Reibungsbelag (16) gemäß einer Verschleißrichtung (X) verwendet wird, die sich orthogonal zur Richtung (A) der Einführung des Verschleißerfassungselements (22) in die erste Öffnung (24) verhält.

13. Verschleißanzeige (10) nach einem der vorstehenden Ansprüche, wobei das Einrastelement (18) entweder auf dem Halteelement (30) oder dem Körper (12) angefügt ist und beispielsweise von einer im Allgemeinen nadelförmigen Feder gebildet wird, oder - in Kombination mit einem Träger eines Belags (16) - einstückig mit dem Träger (14) des Belags (16) ausgebildet ist.

14. Verfahren zur Herstellung einer Verschleißanzeige (10) nach einem der Ansprüche 1 bis 13, wobei das Einrastelement (18) auf dem Körper (12) angefügt ist, **dadurch gekennzeichnet, dass** es aufweist:
- einen Schritt (100) zur Einführung des Drahtelements (22) zur Verschleißerfassung in die erste Aufnahmeöffnung (24),
- einen Schritt (110) zur Einführung des Halteelements (30) in die zweite Aufnahmeöffnung (28), um das Verschleißerfassungselement (22) in der ersten Aufnahmeöffnung (24) zu halten,
- einen Schritt (120) zur Anbringung des Einrastelements (18) auf dem Körper (12), um das Halteelement (30) auf dem Körper (12) zu immobilisieren.
